Europäisches Patentamt

European Patent Office

Office européen des brevets

(19)

(11) **EP 1 078 805 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.$^7$: **B60K 41/28**
// F16D48/08, F16D13:00,
F16D111:00, F16H59:14

(21) Anmeldenummer: **99116567.1**

(22) Anmeldetag: **24.08.1999**

(54) **Steuerung für den Antriebsstrang beim Anfahren eines Kraftfahrzeugs**

Control of vehicle driveline during vehicle start and drive-off

Système de commande pour une ligne de transmission pendant la mise-en-route d'un véhicule

(84) Benannte Vertragsstaaten:
**DE FR IT**

(43) Veröffentlichungstag der Anmeldung:
**28.02.2001 Patentblatt 2001/09**

(73) Patentinhaber: **SIEMENS AKTIENGESELLSCHAFT**
**80333 München (DE)**

(72) Erfinder: **Graf, Fiedrich**
**93049 Regensberg (DE)**

(56) Entgegenhaltungen:
**EP-A- 0 638 742          DE-A- 3 334 711**
**DE-A- 3 831 449          DE-A- 19 637 210**

**Beschreibung**

Die Erfindung betrifft eine Steuerung für den Antriebsstrang eines Kraftfahrzeugs (Antriebsstrangsteuerung).

Ein durch eine Elektronik automatisiert gesteuerter Antriebsstrang (insbesondere für ein Nutzfahrzeug) weist eine Motorsteuerung, eine Getriebesteuerung und eine Kupplungssteuerung auf, die von einer funktionell übergeordneten Fahrbetriebs-Leitelektronik gesteuert werden (DE 38 31 449 A). Aus diesem Dokument sind folgende Merkmale von Anspruch 1 bekannt: Eine Getriebesteuerung, durch die die Schaltvorgänge des automatischen Getriebes gesteuert werden und durch die die jeweilige Fahrsituation des Kraftfahrzeugs ermittelt wird, eine Steuereinrichtung für den Motor, für das Getriebe und für die Kupplung, sowie eine Erkennungsschalung, durch die die jeweilige Fahrsituation des Kraftfahrzeugs ermittelt wird.

Durch eine bekannte Steuerung für ein automatisches Getriebe wird in Abhängigkeit von der Fahrpedalstellung, von der Fahrzeuggeschwindigkeit und gegebenenfalls von weiteren Messgrößen eine Stellgröße für die zu steuernde Einrichtung festgelegt (EP 0 638 742 A). Sie weist einen mehrere Regelbasen enthaltenden Fuzzy-Rechner auf, dem die Messgrößen und von diesen abgeleitete Parameter als Eingangsgrößen zugeführt werden und durch den anhand einer Auswertung der Messgrößen und Parameter nach Regeln der Fuzzy-Logik Ausgangsvariablen erzeugt werden, durch die bei der Festlegung der Stellgröße der jeweilige Fahr- und Lastzustand des Kraftfahrzeugs berücksichtigt werden.

Bei einer Antriebsstrangsteuerung werden über eine Schnittstelle zwischen der Getriebesteuerung und der Motorsteuerung nur die erforderliche Motormomentreduktion betreffende physikalisch dimensionierte Beschreibungsgrößen ausgetauscht (DE 197 27 044 A1). Die Getriebesteuerung legt dabei das Verhalten des Motorsystems auf der Basis eines verallgemeinerten Modells fest. Dieses beschreibt das von der Getriebesteuerung geforderte Verhalten an den Systemgrenzen Motor-Getriebe (Motorabtriebswelle) eindeutig, ohne sich auf die technische Realisierung im Motorsystem zu beziehen.

Die praktische Ausführung eines Motoreingriffs obliegt allein der Motorsteuerung. Diese legt fest, ob ein Zündungseingriff zu erfolgen hat, oder ob die Menge des eingespritzten Kraftstoffs reduziert wird oder ob die Ventilsteuerzeiten oder Ventilcharakteristiken verändert oder ob der Motor über die Drosselklappe gesteuert werden soll. Die Motorsteuerung allein steuert auch alle dazu erforderlichen Aktoren. Für das Anfahren des Kraftfahrzeugs sind bei der bekannten Getriebesteuerung keine besonderen Maßnahmen vorgesehen.

Eine bekannte automatisch betätigte Kupplung wird durch ein hydraulisches Stellglied zwischen einer voll ausgerückten Lage über Lagen, in denen ein Schlupf in der Kupplung auftritt, in eine voll eingerückte Lage bewegt (DE 44 34 111 A1). Ein Berührungspunkt der Kupplung wird ermittelt und die dabei von dem Stellglied eingenommene Lage gespeichert. Die Motordrehzahl in dem Berührungspunkt wird auf eine Drehzahl geregelt, die etwas über der Drehzahl der Kupplungsausgangswelle liegt und das Stellglied wird in die dem Berührungspunkt entsprechende Lage geregelt.

Bei einem ebenfalls bekannten System zum gemeinsamen Steuern einer Servokupplung und eines Fahrzeugmotors werden im Bereich niedriger Fahrzeuggeschwindigkeiten, zum Beispiel beim Anfahren, die Kupplung und der Motor so gesteuert, dass die Stellung des Fahrpedals die Beschleunigung oder die Geschwindigkeit des Fahrzeugs vorgibt, während außerhalb des Anfahrvorgangs der Antriebsstrang abhängig von der Fahrpedalstellung leistungs- oder momentenskaliert gesteuert wird (DE 197 26 214 A1).

Bei einer Einrichtung zum automatischen Einstellen einer Kupplung in einem Antriebsstrang mit einem Motordrehzahlregelkreis und einem Kupplungsmomentregelkreis wird das unter Annahme höchstmöglicher Motormomentaussteuerung maximal erreichbare Motordrehmoment ermittelt (DE 196 16 960 C2). Ein Begrenzer begrenzt den fahrpedalstellungsabhängigen Sollwert für den Kupplungsmomentregelkreis auf einen Maximalwert, der höchstens so groß ist wie das dem Begrenzer mitgeteilte maximal erreichbare Moment ist.

Bei keiner der drei letztgenannten Steuerungen wird die von einer Erkennungsschaltung für die Anfahrsituation und die Fahrercharakteristik gelieferte Information zum Steuern eines Anfahrvorgangs berücksichtigt.

Der Erfindung liegt die Aufgabe zugrunde, eine Antriebsstrangsteuerung zu schaffen, bei der ein automatisches Anfahren des Kraftfahrzeugs unter Berücksichtigung der jeweiligen Anfahrsituation möglichst sicher und komfortabel durchgeführt wird. Diese Antriebsstrangsteuerung ist für Kraftfahrzeuge mit automatischem Getriebe, sowohl des Planetenradtyps als auch des CVT-Typs vorgesehen, insbesondere aber für solche mit einem automatisierten Handschaltgetriebe, bei dem der Fahrer den einzulegenden Gang oder die Getriebeübersetzung der Ökonomie beim Anfahren eines Kraftfahrzeugs unter den unterschiedlichsten Umgebungsbedingungen, wie zum Beispiel beim Anfahren am Berg, beim Rangieren und beim Einparken. Weitere Vorteile werden in der folgenden Beschreibung aufgeführt.

Ausführungsbeispiele der Erfindung werden im folgenden anhand der Zeichnungen erläutert. Es zeigen:

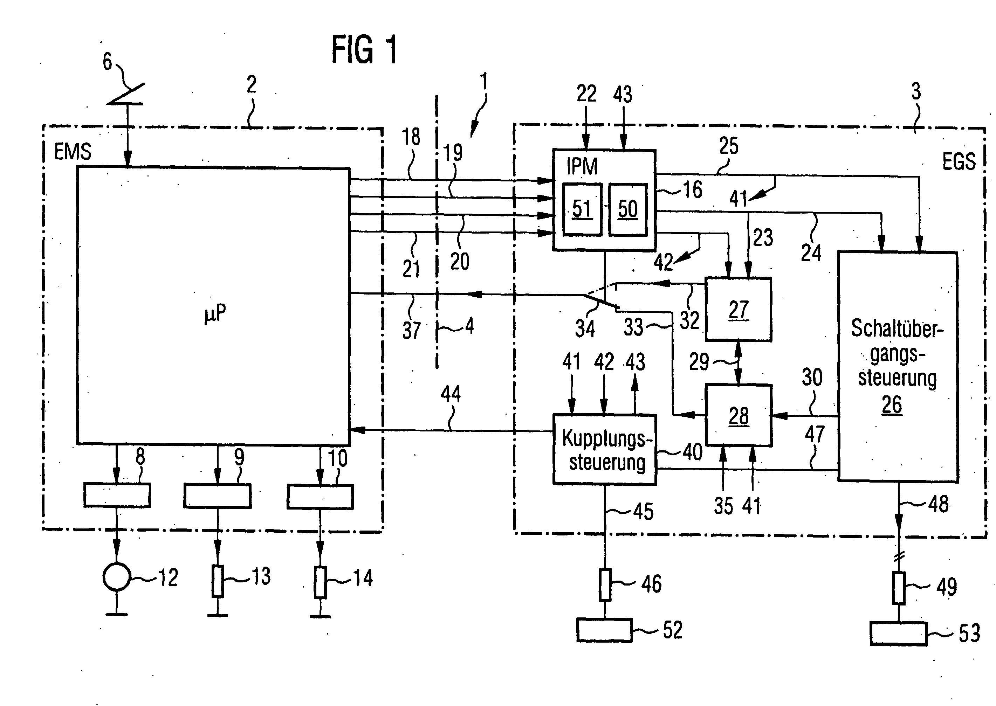

Figur 1     eine Antriebsstrangsteuerung gemäß der Erfindung;

bestimmt, der Schaltvorgang aber automatisch von der Getriebesteuerung durchgeführt wird.

Die Aufgabe der Erfindung wird durch eine Antriebsstrangsteuerung nach Anspruch 1 gelöst. Zweckmäßige Weiterbildungen der Erfindung sind in den Unteransprüchen niedergelegt.

Die Antriebsstrangsteuerung eines Kraftfahrzeugs mit einem Motor und einem automatischen Getriebe ist versehen mit einer Motorsteuerung, durch die das Drehmoment des Motors beeinflussende Größen gesteuert werden, sowie mit einer Getriebesteuerung, durch die die Schaltvorgänge des automatischen Getriebes gesteuert werden, und die mit der Motorsteuerung Daten austauscht, durch die ein komfortabler Betrieb des Kraftfahrzeugs ermöglicht wird. Dabei ist die Getriebesteuerung mit einer Erkennungsschaltung versehen, durch die die jeweilige Fahrsituation des Kraftfahrzeugs und die Fahrercharakteristik ermittelt werden. Sie weist außerdem eine Steuereinrichtung für die Kupplung auf, die beim Anfahren des Kraftfahrzeugs an die ermittelte Fahrsituation und/oder die Fahrercharakteristik adaptiv angepaßt wird. Durch die Steuereinrichtung werden beim Anfahren des Kraftfahrzeugs an die Motorsteuerung Signale übermittelt, mit denen die Motordrehzahl nach gespeicherten Kennlinien gesteuert wird.

Die Erkennung von Fahrsituationen erfolgt zweckmäßigerweise mit einer als Fuzzylogikschaltung ausgebildeten Erkennungsschaltung. Fortschrittliche Getriebesteuerungen sind ohnehin häufig mit Fuzzylogikkomponenten versehen (siehe zum Beispiel F. Graf und H. Weil: Advanced Transmission with Fuzzy Logic, 3rd International Conference, Bologna, 29-31 March 1995, Technical Papers pp. 379-389; sowie EP 0 576 703 A1) und können deshalb leicht mit einer solchen Fahrsituationserkennung ausgerüstet werden.

Die Vorteile der Erfindung liegen vor allem in der mit ihr erreichbaren Verbesserung des Komforts, der Sicherheit und der Ökonomie beim Anfahren eines Kraftfahrzeugs unter den unterschiedlichsten Umgebungsbedingungen, wie zum Beispiel beim Anfahren am Berg, beim Rangieren und beim Einparken. Weitere Vorteile werden in der folgenden Beschreibung aufgeführt.

Ausführungsbeispiele der Erfindung werden im folgenden anhand der Zeichnungen erläutert. Es zeigen:

Figur 1    eine Antriebsstrangsteuerung gemäß der Erfindung;

Figur 2    den zeitabhängigen Verlauf von Motordrehzahlen und -drehmomenten wiedergebende Kennlinien der Antriebsstrangsteuerung nach Figur 1 bei einem Anfahrvorgang;

Figur 3    den Verlauf entsprechend Figur 2 bei einem anderen Ausführungsbeispiel der Antriebsstrangsteuerung nach Figur 1, und

Figur 4    ein Fuzzy-Logik-System der Antriebsstrangsteuerung nach Figur 1.

Moderne Getriebesteuerungen können mit der eigenen Sensorik oder über Signale von in dem Kraftfahrzeug ohnehin vorhandenen Sensoren, die über ein CAN-Netzwerk zur Verfügung gestellt werden, eine Reihe von Informationen gewinnen oder berechnen, die einen effektiven Betrieb des Antriebsstrangs ermöglichen (siehe: Graf F, Weil G.: ‚Advanced Transmission Control with Fuzzy Logic' . 3rd Int. Conference, Vehicle Comfort and Ergonomics, Bologna March 95). Diese Informationen kennzeichnen den Fahrstil des Fahrers, die Fahrbahnsteigung und/oder die Beladung des Kraftfahrzeugs. Hinzu können Informationen über einen auftretenden Radschlupf kommen. Mit der erfindungsgemäßen Antriebsstrangsteuerung erfolgt ein wesentlich umfassenderer Gebrauch dieser Informationen, um eine Anfahrkupplung und einen automatischer Anfahrvorgang angepasst an die jeweilige Fahrsituation so zu steuern, dass die Sicherheit, Komfort und Ökonomie des Kraftfahrzeugbetriebs gewährleistet ist.

Eine schematisch dargestellte Antriebsstrangsteuerung 1 (Figur 1) eines Kraftfahrzeugs enthält eine elektronische Motorsteuerung (abgekürzt: EMS) 2 und eine elektronische Getriebesteuerung (EGS) 3, die untereinander über eine Schnittstelle 4 kommunizieren, indem sie Daten über Betriebsgrößen des Kraftfahrzeugs und Steuersignale, insbesondere in Form von physikalischen Beschreibungsgrößen, untereinander austauschen. Die Getriebesteuerung enthält auch eine noch zu beschreibende Kupplungssteuerung, so dass sie der Vollständigkeit halber als Getriebe- und Kupplungssteuerung 3 bezeichnet werden muss. Dies wird aber im folgenden unterlassen.

Die Motorsteuerung 2 empfängt Signale von einem Fahrpedal 6 und sie weist drei Steuersignalausgaben auf: eine Signalausgabe 8 für die Drosselklappe, eine Signalausgabe 9 für die Kraftstoffeinspritzung und eine Signalausgabe 10 zum Steuern des Zündwinkels eines hier nicht weiter dargestellten Motors eines Kraftfahrzeugs. Über die Signalausgabe 8 wird ein die Drosselklappe des Kraftfahrzeugs betätigender Elektromotor 12 gesteuert. Über die Signalausgaben 9 und 10 werden Aktoren 13 beziehungsweise 14 (die zum Beispiel als piezoelektrische oder induktive Aktoren ausgeführt sind) gesteuert, die die einzuspritzende Kraftstoffmenge und den Zündwinkel des Motors einstellen.

Die Getriebesteuerung 3 enthält folgende Bestandteile: eine Schaltsteuerung oder IPM-Steuerung 16, die ein integriertes, d. h. gesamtheitliches Steuern des Antriebsstrangs durchführt (IPM steht für Integrated Powertrain Management) und insbesondere die Schaltstrategie festlegt. Sie erhält über Leitungen 18, 19 und 20 von der Motorsteuerung 2 Daten über verschiedene Werte des Motordrehmoments (auch: Motormoments). Über eine Leitung 21 erhält sie eine Information über das von dem Fahrer des Kraftfahrzeugs vorgegebene Motorsollmoment oder aber über die Stellung des Fahrpedals 6.

Über eine Leitung 22 empfängt die IPM-Steuerung 16 die jeweilige Abtriebsdrehzahl des Getriebes, die der Raddrehzahl und damit - in einem vorgegebenen Verhältnis - der Geschwindigkeit des Kraftfahrzeugs entspricht. Über eine sich verzweigende Signalleitung 23, 24 sendet die IPM-Steuerung 16 einen einzustellenden Zielgang oder eine Zielübersetzung an eine Schaltübergangssteuerung 26 und an eine erste Entscheidungsschaltung 27 sowie an eine zweite Entscheidungsschaltung 28. Diese beiden Entscheidungsschaltungen sind durch eine bidirektionale Leitung 29 miteinander verbunden.

Alle relevanten Informationen über die Fahrstrategie und die jeweilige Fahrsituation gelangen über eine Leitung 25 an die Schaltübergangssteuerung 26. Diese sendet an die zweite Entscheidungsschaltung 28 über eine Leitung 30 Steuersignale, mit denen zum Beispiel die zeitliche Ableitung des Motordrehmoments, d. h. die Geschwindigkeit, mit der das Motordrehmoment verändert wird, gesteuert wird.

Je ein Signalausgang der ersten und der zweiten Entscheidungsschaltung 27, 28 sind über Signalleitungen 32 bzw. 33 mit Anschlüssen eines Schalters 34 verbunden. Der von der IPM-Steuerung 16 gesteuerte Schalter 34 verbindet entweder den Ausgang der ersten Entscheidungsschaltung 27 oder den Ausgang der zweiten Entscheidungsschaltung 28 über eine Leitung 37 mit der Motorsteuerung 2, d.h. insbesondere mit einem Mikroprozessor 38 der Motorsteuerung. Anstelle des Schalters 34 kann auch ein Addierer 36 vorgesehen sein, durch den die Signale auf den Leitungen 32 und 33 addiert werden und dessen Ausgang ebenfalls über die Leitung 37 mit der Motorsteuerung 2 verbunden ist. Über die Leitung 37 teilt die Getriebesteuerung 3 der Motorsteuerung 2 das angeforderte Motordrehmoment mit.

Über eine Leitung 35 wird an die zweite Entscheidungsschaltung 28 ein Zeittakt gelegt, mit dem das Steuern der Getriebesteuerung 3 von dem Steuern der Motorsteuerung 2 getrennt werden kann.

An der Leitung 21 liegt das von dem Fahrer angeforderte Motordrehmoment an. Dieses sogenannte Fahrerwunschmoment wird außerhalb einer Schaltung, d. h. eines Schaltvorgangs, von der IPM-Steuerung 16 korrigiert. Während einer Schaltung wird es von der Schaltübergangssteuerung 26 korrigiert. Der Schalter 34 unterscheidet somit zwischen der Steuerung außerhalb eines Schaltvorganges und der Steuerung innerhalb oder während eines Schaltvorganges.

Eine - vorzugsweise als Kupplungsregler ausgebildete - Kupplungssteuerung 40 empfängt von der IPM-Steuerung 16 über eine von der Leitung 25 abzweigende Leitung 41 alle relevanten Informationen über die Fahrstrategie und die jeweilige Fahrsituation und über eine Leitung 42 eine Information über die Zielposition oder das Zieldrehmoment der Kupplung, die beim Anfahren des Kraftfahrzeugs benötigt wird. Über die Leitung 41 empfängt die Kupplungssteuerung 40 Informationen über die jeweilige Fahrstrategie und Fahrsituation. Über die Leitung 42 empfängt sie Informationen über die Zielposition der Kupplung und das zu übertragende Motordrehmoment, was zum Beispiel beim Anfahren wichtig ist. Die Kupplungssteuerung 40 sendet ihrerseits über eine Leitung 43 an die IPM-Steuerung 16 und über eine Ausgangsleitung 44 an die Motorsteuerung 2 die tatsächliche Kupplungsposition oder das korrespondierende Kupplungsdrehmoment.

Die Leitung 41 ist auch an die zweite Entscheidungsschaltung 28 angeschlossen, so dass an diese auch alle relevanten Informationen über die Fahrstrategie und die jeweilige Fahrsituation gelangen. Der Verlauf der (Signal-)Leitungen 41 und 42 ist in der Zeichnung der besseren Übersichtlichkeit wegen nur angedeutet.

Die Kupplungssteuerung 40 ist durch einer Steuerleitung 45 mit einem Kupplungsaktuator oder Kupplungsaktor 46 verbunden, der eine Kupplung 52 steuert. Über eine Leitung 47, die die Schaltübergangssteuerung 26 mit der Kupplungssteuerung 40 verbindet, wird das Steuern der Kupplung mit dem Schaltvorgang (bei einem automatisierten Handschaltgetriebe oder AMT-Getriebe) koordiniert.

Die Schaltübergangssteuerung 26 ist durch mehrere Steuerleitungen 48, die hier als eine Mehrfachleitung dargestellt sind, mit elektromechanischen oder elektrohydraulischen Getriebeaktuatoren oder Getriebeaktoren 49 verbunden, die die Gangwechsel in einem Getriebe 53 durchführen, indem sie in bekannter Weise Schaltgabeln des Getriebes 53 betätigen. Diese Getriebeaktuatoren setzen dabei die Steuerbefehle in Längs- und Drehbewegungen der Schaltgabeln um. Eine Drehbewegung dient dem Einlegen oder Ausrücken eines Getriebegangs, eine Längsbewegung der Gassenwahl. Einzelheiten der Gangaktuatoren im Getriebe sind für sich bekannt (siehe zum Beispiel R. Fischer und R. Berger (LUK), Automatisierung von Schaltgetrieben, in dem Bericht der VDI-Tagung "Getriebe und Fahrzeuge", 19.-20.03.1998, Seite 95 ff.).

Die Getriebesteuerung 3 ist mit einer Erkennungsschaltung 50 versehen, die dazu dient, die jeweiligen Fahrsituationen des Kraftfahrzeuges zu erkennen, wie da sind: Anfahren, Rangieren, beschleunigte, gleichmäßige oder verzögerte Fahrt, Bergauf- oder Bergabfahrt, Kurvenfahrt, Fahrt innerörtlich, auf Landstraßen oder Schnellstraßen, Fahrt bei winterlichen Straßenzuständen usw. Die Erkennungsschaltung 50 ist im vorliegenden Ausführungsbeispiel als Fuzzylogikrechner oder -regler ausgebildet und Bestandteil der IPM-Steuerung 16. Sie wertet Sensorsignale aus, die in der Getriebesteuerung 3 ohnehin vorliegen und von dieser ausgewertet werden, wie es in dem eingangs zitierten Beitrag von F. Graf und H. Weil und in der genannten EP 0 576 703 A1 erläutert wird.

Die Getriebesteuerung 3 ist auch mit einem Kennfeldspeicher 51 versehen, der Kennlinien enthält, die dazu dienen, den Antriebsstrang - und insbesondere die Kupplung 52 - beim Anfahren des Kraftfahrzeugs angepasst an die jeweilige Umgebungs- und Anfahrsituationen zu steuern. Der Kennfeldspeicher 51 ist im vorliegenden Ausführungsbeispiel Bestandteil der IPM-Steuerung 16. Die IPM-Steuerung 16 ist zentraler und wichtigster Teil der Steuerung des Antriebsstrangs, sie koordiniert die Funktion seiner sämtlichen Einzelbestandteile. Sie wird deshalb auch als Meta-Controller bezeichnet. Die IPM-Steuerung 16 ist hier zwar als in der Getriebesteuerung 3 enthalten dargestellt, dies ist aber nicht notwendig. Sie kann auch anderswo, zum Beispiel in der Motorsteuerung 2 untergebracht sein.

Entscheidend für eine individuelle Optimierung der Antriebsstrangsteuerung 1 nach den in der jeweiligen Situation maßgeblichen Kriterien ist eine sichere Erkennung der aktuellen Fahrsituation oder Fahrmanöver. Durch die Fahrsituationserkennung innerhalb der adaptiven Schaltstrategie, die von der IPM-Steuerung 16 realisiert wird, ist es möglich, Fahrleistungsanforderungen nicht nur in ihrer Intensität, sondern auch in ihrem dynamischen Anspruch zu klassifizieren. Insbesondere erkennt sie Anfahrsituationen und deren Varianten, wie Rangieren, Anfahren am Berg, Stop-and-go-Fahrt usw.

Im Rahmen von Programmen, wie sie von dem Fuzzylogikrechner oder -regler aus der EP 0 576 703 A1 verarbeitet werden, arbeitet die Erkennungsschaltung 50 Fuzzylogikprogramme ab.

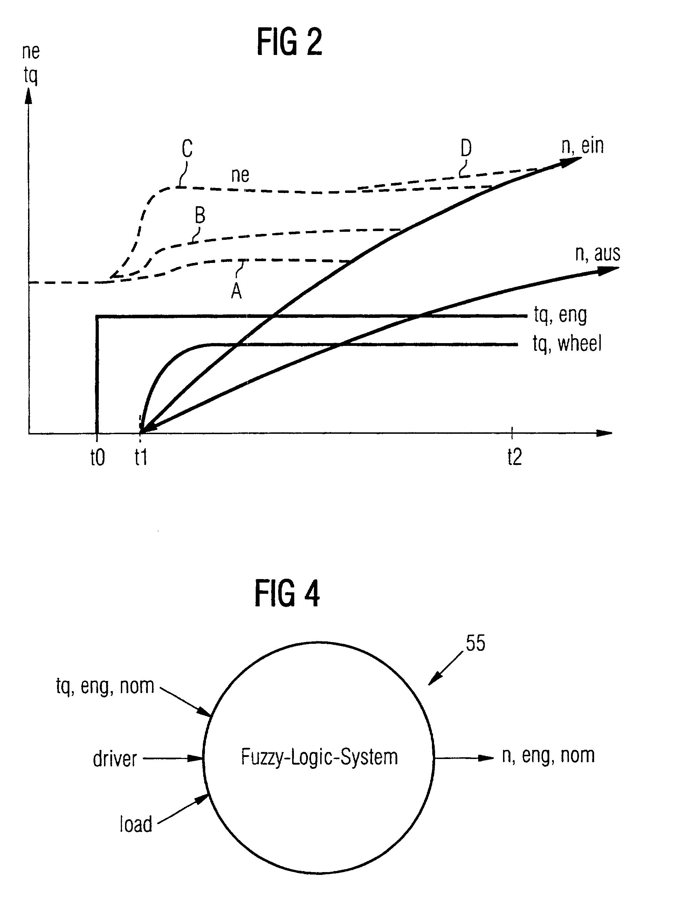

Eine besonders vorteilhafte Nutzung von fahrstrategie- und fahrsituationsrelevanten Informationen ist die davon abhängige Gestaltung des Anfahrvorganges. Ist das Kraftfahrzeug mit einem üblichen Kupplungssteuerungssystem versehen, so wird beim Anfahren ein vorgegebener Verlauf der Motordrehzahl oder aber die Differenzdrehzahl, d. h. der Schlupf, reproduziert (Figur 2). Es sei darauf hingewiesen, daß zwar im folgenden Text die Rede von einer Trockenkupplung ist, die Erläuterungen aber auch genauso für eine naßlaufende, hydraulisch betätigte Kupplung gelten.

In Figur 2 ist der zeitliche Verlauf folgender Größen beim Anfahren eines Kraftfahrzeugs dargestellt: die Motordrehzahl ne, die Getriebeeingangsdrehzahl n,ein und die Getriebeausgangsdrehzahl n,aus. Gibt der Fahrer eines stehenden Kraftfahrzeugs zu einem Zeitpunkt t0 Gas, so wird bei noch geöffneter Kupplung die Motordrehzahl erhöht, bis zu einem Zeitpunkt t1 die Kupplung eingerückt wird. Anschließend beginnt das Fahrzeug - bedingt durch die Übertragung des Motordrehmoments über den Antriebsstrang - zu beschleunigen. Die Drehzahl ne zu dem Zeitpunkt t1 hat maßgeblichen Einfluß auf die Fahrbarkeit des Kraftfahrzeugs, da die eingestellte Motordrehzahl mit einem zugehörigen Motordrehmoment gekoppelt ist. Dies beeinflusst die Dosierung der Motordrehzahl zum Beispiel beim Rangieren, bei Beschleunigungen und bei der Bergauffahrt. Außerdem beeinflusst es den Kraftstoffverbrauch. Unangepaßte Motordrehzahlen können auch zu einem Abwürgen des Motors führen.

Dargestellt sind weiterhin das von dem Fahrer mit dem Fahrpedal angeforderte oder bewirkte Motor(dreh)moment tq,eng und das Rad(dreh)moment tq, wheel. Bei herkömmlichen Antriebsstrangsteuerungen ist das Raddrehmoment eine sich aus dem Motordrehmoment und der Getriebeübersetzung ergebende Größe, sie wird dort nicht als Führungsgröße für die Regelung des Antriebsstrangs verwendet. Auch benutzen herkömmliche Antriebsstrangsteuerungen nur eine Kennlinie für den Anfahrvorgang. Die vorliegende Antriebsstrangsteuerung 1 hingegen verwendet für unterschiedliche Anfahrsituationen jeweils an diese angepasste Kennlinien.

Eine gestrichelte Linie A (Figur 2) gibt den für das Rangieren typischen Verlauf der Motordrehzahl ne wieder, eine Linie B deren Verlauf für einen komfortablen, drehzahlreduzierten und wirkungsgradoptimalen Anfahrvorgang und eine Linie C den Verlauf von ne für einen sogenannten 'Racing Start' (sogenannter Kavaliersstart) oder für ein Anfahren am Berg.

Die hier erstmals angewandte Anpassung der Motordrehzahl an die jeweils vorliegende Anfahrsituation berücksichtigt die Wechselwirkung zwischen der von der Kupplungssteuerung eingestellten Motordrehzahl und der Charakteristik des jeweiligen Motors. Ein höheres oder gar das maximale Motordrehmoment werden erst bei Drehzahlen über 3000 U/min. erreicht (dies gilt insbesondere für Benzinmotoren).

Die Berücksichtigung der Motorcharakteristik ermöglicht es, sofort die bestmögliche Beschleunigung zu realisieren. Das bedeutet, daß der Antriebsstrang abhängig von den Umwelt- und Fahrbedingungen gesteuert wird. Wenn zum Beispiel ein Fahrer bei im Economy-Fahrprogramm befindlicher Getriebesteuerung sein Kraftfahrzeug plötzlich stark beschleunigt, erhöht die Antriebsstrangsteuerung 1 zuerst die Motordrehzahl und rückt danach die Kupplung 52 ein. Dies bewirkt eine schnellere Beschleunigung als das übliche Hochfahren des Motordrehmoments bei geschlossener Kupplung.

Das Regeln oder Steuern der Motordrehzahl durch die Kupplungssteuerung 40 beeinflusst also mittelbar (indirekt) das Motordrehmoment. Dazu werden die notwendigen Informationen über die Fahrsituationserkennung von der Erkennungsschaltung 50 über die Leitungen 25, 41 an die lokale Kupplungssteuerung 40 übermittelt. Diese setzt dann die Informationen durch Auswahl einer der Anfahrsituation entsprechenden Kennlinie - die weiter hinten noch erläutert werden - in einen wirksamen Steuerungsvorgang um. Spezielle Kennlinien können auch für den Winterbetrieb oder den Betrieb bei bereits thermisch stark beanspruchter Kupplung vorgesehen sein.

Der sogenannte Meta-Controller 16 kann gemäß den Fahrervorgaben die Kupplungssteuerung 40 parametrieren. Er verfügt über Kennlinien für die Motordrehzahl in Form einer Funktion ne = f(tq,eng,nom; t), wobei tq,eng,nom das angeforderte Motordrehmoment und t die Zeit ist.

Dabei kann der Fahrer über das Fahrpedal 6 je nach der vorhandenen Motorsteuerung eine Drosselklappenstellung oder ein Soll-Motordrehmoment tq, eng,nom anfordern. Es sei im vorliegenden Beispiel vorausgesetzt, daß das Motordrehmoment trotz konstanter Fahrpedalstellung mit der Motordrehzahl variiert, so wie es zum Beispiel dem Verhalten eines Motors mit mechanischer Motorlaststeuerung entspricht.

Eine noch vorteilhaftere Anpassung der Antriebsstrangsteuerung 1 an unterschiedliche Fahrstile und Anfahrbedingungen wird mit dem nachfolgenden Ausführungsbeispiel erreicht. Bei diesem wird das Motormoment und damit auch das Radmoment nicht nur indirekt durch an die Kupplungsteuerung angepaßte und durch die Schaltstrategie bestimmte Motordrehzahlverläufe beeinflußt, sondern es wird zusätzlich das Motormoment gesteuert, um einen Soll-Radmomentverlauf zu erreichen, der aus der Fahrpedalstellung berechnet wird.

Es wird also vorausgesetzt, daß das Fahrpedal grundsätzlich ein Soll-Radmoment vorgibt. Dieses wird zum Beispiel unter Verwendung von Fahrsituationsinformationen ermittelt, so wie es in der Anmeldung DE 196 48 055 A1 beschrieben ist. Die Steuerungsstrategie folgt grundsätzlich dieser Art von (Primär-) Fahrpedalinterpretation.

Das so ermittelte Soll-Radmoment wird aufgelöst in Sollvorgaben für das Motordrehmoment und die Kupplungsstrategie einerseits und für die Motor-Solldrehzahl andererseits. Damit ergibt sich direkt ein eingeprägtes Führen des Motors, das dynamisch optimiert wird. Eine Beeinflussung des Radmoments indirekt durch die Drehzahlführung und damit durch das Motordrehmoment entfällt bei diesem Ausführungsbeispiel, der Antriebstrang folgt strikt der Vorgabe des Fahrers, und dies erleichtert die Fahrbarkeit des Kraftfahrzeugs. Es gilt der folgende Zusammenhang:

$$tq,eng,nom = tq,wheel,nom / I \qquad (I)$$

Darin sind:

| | |
|---|---|
| tq,eng,nom | das Soll-Motormoment |
| I | die Übersetzung des eingelegten Anfahrganges |
| nom | ein Sollwert |

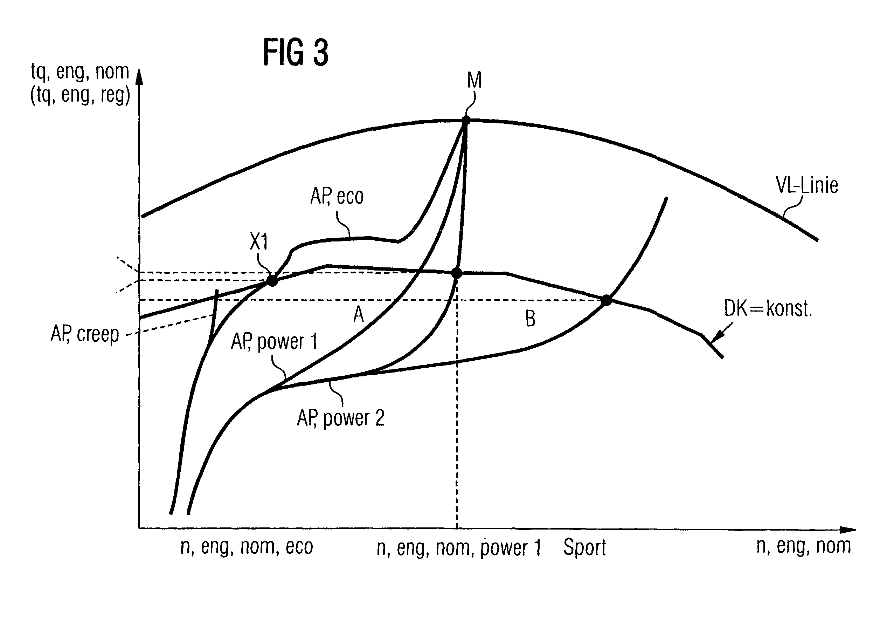

Es gibt unterschiedliche Möglichkeiten, das geforderte das Soll-Motormoment tq,eng,nom in Abhängigkeit von ne zu realisieren. Dies wird nun anhand von Figur 3 erläutert.

Da eine Trocken- und auch eine Naßkupplung (in Lamellenbauweise) im Gegensatz zu einem Drehmomentwandler kein Drehmoment verstärken können, leitet sich bei ihnen das Soll-Motordrehmoment direkt aus dem Soll-Radmoment ab, wie aus Gleichung (I) ersichtlich ist. Soll das angeforderte Radmoment beim Anfahren möglichst effizient genutzt werden, muss eine verbrauchsoptimierte Kennlinie A in dem Kennfeld nach Figur 3 überstrichen werden. Diese Kennlinie wird zusammen mit dem Motor-Verbrauchskennfeld erstellt und sie dient dazu, bei einer bestimmten Rad- oder Motormomentanforderung den verbrauchsminimalen Motordrehzahlwert zu ermitteln, d. h. die Motordrehzahl, die den geringsten Kraftstoffverbrauch ergibt. Damit lassen sich die Führungsgrößen tq,eng,nom und tq,clutch für die Motor- und die Kupplungsteuerung bilden. Vernachlässigt werden dabei dynamische Drehmomentanteile, die zum Beispiel erforderlich sind, um die Motordrehzahl auf einen bestimmten Wert einzustellen.

Das Soll-Motordrehmoment wird durch die Drehzahlregelung in der Kupplungsteuerung 40 eingestellt. Die Zieldrehzahl für diese Drehzahlregelung wird auch anhand der Kennlinie AP,eco gewonnen. Die aus dem Diagramm von Figur 3 abgeleitete Soll-Motordrehzahl n,eng,nom entspricht der Anfahrdrehzahl zum Zeitpunkt t1 (Figur 2), bei der die Kupplung zu schließen beginnt (sogenannter Berührpunkt). Im weiteren Verlauf bis zum vollständigen Schließen der Kupplung zum Zeitpunkt t2 kann die Motordrehzahl gemäß Figur 2 nachgeführt werden, falls die Lastanforderung sich ändert (Kurve D).

Bei besonders einfachen Antriebsstrangsteuerungen, die über keine Drehzahlregelung verfügen, können in einem Kennlinienspeicher - statt der Solldrehzahlverläufe als Funktion der Soll-Drehmomente - Kupplungspositions-Kennlinien abgelegt sein. Überlagert wird ihnen eine Zeitfunktion, um den Kupplungsschlupf abzubauen.

Die beschriebene Steuerung des Antriebsstrangs anhand der AP,eco-Kennlinie von Figur 3 ergibt einen sehr geringen Kraftstoffverbrauch bei Startvorgängen. Eine wirksame Schonung der Kupplung ergibt sich aus geringen Differenzdrehzahlen. Mit der Kennlinie AP,eco lassen sich alle vom Fahrer benötigten Drehmomente (und zwar bis zum absoluten Drehmomentmaximum M) mit - von der vorgegebenen Betriebsstrategie abhängenden - unterschiedlichen Drehzahlen bereitstellen. Bei einer Mehranforderung von Drehmoment in einem großen Schritt, wie sie dem Übergang von einem Punkt x1(n,eng,nom,eco) zu einem Punkt M(n,eng, nom,power1) in dem Kennfeld von Figur 3 entspricht, wird ausgekuppelt, um den Motor mit Drehmoment zum Hochdrehen zu versorgen. Dies gibt folgende Gleichung wieder.

$$delta\_ne,eng,nom = (tq,eng / J) * delta\_t \qquad (II)$$

Darin sind:

| | |
|---|---|
| J | das Trägheitsmoment des Motors |
| delta_ne,eng,nom | der Drehzahlsprung des Motors |
| delta_t | die erforderliche Zeit |

Dieser Vorgang reduziert allerdings die Fahrleistung. Besser ist es deshalb, bei durch die IPM-Steuerung 16 vorausschauend erkannter (zum Beispiel aus der Fahrweise) Absicht des Fahrers zu beschleunigen oder auch bei einem hohem Fahrwiderstand ein höheres Motordrehzahlniveau einzustellen, wie das der Kennlinie AP,power1 entspricht Damit wird ein zügiges, gleichförmiges Anfahren und Beschleunigen des Fahrzeugs erreicht. Bei Fahrzeugen mit sehr sportlichen Charakter kann auch die Kennlinie AP,power2 verwendet werden (für einen sogenannten Racing-Start), oder auch bei einer fahrleistungsorientierten Situation (zum Beispiel beim Überholen). Dies kann auch manuell ausgelöst werden, und zwar auch bei anderen Betriebsmoden, wenn über die automatische Betriebspunkterzeugung hinaus auch ein Eingriff des Fahrers möglich ist (entsprechende Taster sind häufig im Kraftfahrzeug für eine Schaltprogrammauswahl vorhanden).

Die leistungsorientierten Kennlinien stellen auch eine gute Möglichkeit dar, um Fahrspaß oder Fahrbarkeit zu vermitteln, zum Beispiel bei einem Racing-Start bzw. bei einem Anfahren am Berg. Allerdings ist dabei die Kupplung einer hohen Wärmebelastung ausgesetzt, da sie eine hohe Differenzdrehzahl aufnehmen muß. AP,power2 ist die Kennlinie maximalen Drehmoments, DK=konst ist die Linie konstanter Drosselklappenstellung und VL ist die Volllastkennlinie des Motors.

Die verbrauchsoptimierte Kennlinie AP,eco, die die - in der Zeichnung nicht dargestellten - Linien konstanten spezifischen Verbrauchs senkrecht schneidet, stellt bei unterschiedlich angeforderten Motordrehmomenten dagegen den geringsten Verbrauch sicher. Dies ist entscheidend bei einem Betrieb im Stadtverkehr, um minimale Verbräuche zu realisieren. Darüber hinaus können je nach Betriebsart des Motors (wie etwa bei GDI: Schichtladungs-/ homogener Betrieb) dem Motorbetrieb unterschiedliche Verläufe eingeprägt werden, um bezüglich der Verbrennungsstabilität, günstige Arbeitsbereiche des Motors zu erhalten.

Übermäßige Hitzeentwicklung in der Kupplung, die zum Beispiel durch eine thermische Modellrechnung in der IPM-Steuerung 16 erkannt wird, kann bei anhaltenden Startvorgängen (etwa ein permanentes Anfahren am Berg) zu einer Reduktion der Motor-Solldrehzahl ne,nom führen. Es ist wichtig, diese Änderung im Systemverhalten dem Fahrer mitzuteilen (durch ein akustisches oder optisches Warnsignal). Generell sichert die Antriebsstrangsteuerung 1 die für den jeweiligen Startvorgang beste Lösung, ohne daß der Fahrer dies (zum Beispiel über Taster) vorgeben muß .

Ein weiteres nützliches Merkmal der Antriebsstrangsteuerung 1 ist der Kriechmodus (creep-mode) des Kraftfahrzeugs. Er betrifft den Betriebsfall des Rangierens und er wird mit der Kennlinie AP,creep (Figur 3) gesteuert. Bei dem Ausführungsbeispiel gemäß Figur 2 wird das Fahrpedal auch skaliert, und zwar durch die IPM-Steuerung 16, die diesen Betriebsfall auch erkennt. Dabei wird die Empfindlichkeit für kleine Fahrpedalwerte reduziert. Darüber hinaus ist ein frühes Einkuppeln sinnvoll, um die Schleifzeit der Kupplung 52 zu begrenzen. In dem Betriebsfall ‚erhöhte Last' muss andererseits die Soll-Motordrehzahl erhöht werden.

Die Sollradmoment-Vorgabe in der Antriebsstrangsteuerung 1 ergibt einen weiteren Freiheitsgrad beim Steuern, der dazu benutzt wird, eine fahrsituationsspezifische Zuordnung der Fahrpedalstellung zu dem Soll-Radmoment vorzunehmen. Damit lässt sich im Rangierbetrieb oder im Rückwärtsgang ein geringeres Radmoment bei gleicher Fahrpedalstellung erreichen, womit das Fahrzeug feinfühliger bewegt werden kann. Dies ergibt erhebliche Verbesserungen gegenüber einer ausschließlichen Behandlung dieses Modus durch Steuern der Soll-Motordrehzahl.

Diese Möglichkeit kann soweit ausgebaut werden, dass ein Verhalten ähnlich einem Drehmomentwandler erzeugt wird. Ein Beispiel dafür ist, dass ein großer Anfahrwiderstand ein größeres Radmoment benötigt. In diesem Fall wird ein größeres Soll-Radmoment, mit einem daraus sich ergebenden höheren Motordrehmoment vorgegeben. Durch diese Anhebung des Motordrehmoments erübrigt sich eine größere Anhebung der Motordrehzahl, womit der Kupplungsverschleiß reduziert wird. Durch Festlegen der Arbeitspunkte der Antriebsstrangsteuerung 1 mit den Kennlinien AP,power1 und AP,power2 wird das jeweils günstigste Motordrehzahlniveau mit einer ausreichender Motormomentenreserve zur Verfügung gestellt.

Falls es die jeweils gegebenen Anfahrbedingungen erfordern, können in einfacher Weise auch Zwischenwerte zwischen den Kennlinien der Figur 3 generiert werden, zum Beispiel durch eine Interpolation zwischen den Kennlinien AP,eco und AP,power1 oder AP,power2.

Neben der beschrieben Generierung von Solldrehzahlen anhand von Kennlinien können sie auch mit einem Fuzzy-Logik-System 55 erzeugt werden (Figur 4). Dieses System empfängt als Eingangssignale die Größen tq,eng,nom, Fahrerwert und/oder Lastwert und berechnet daraus eine Soll-Motordrehzahl n,eng,nom. Ein solches Fuzzy-Logik-System ist in dem genannten Aufsatz von F. Graf und H. Weil beschrieben. Es arbeitet hier einen aus folgenden Regeln (rules) bestehenden Fuzzylogik-Regelsatz ab:

Rule 1: IF tq,eng,nom IS high AND driver IS sporty THEN n,eng,nom IS very_high.

Rule 2: IF tq,eng,nom IS high AND load IS high THEN n,eng,nom IS very_high.

Rule 3: IF tq,eng,nom IS med AND load IS high THEN n,eng,nom IS med.

Rule 4: IF tq,eng,nom IS med AND driver IS economy THEN n,eng,nom IS med.

Rule 5: IF tq,eng,nom IS med AND driver IS sporty THEN n,eng,nom IS med_high.

Rule 6: IF tq,eng,nom IS low THEN n,eng,nom IS low.

Grundsätzlich lassen sich alle diese in Kennfeldern abgelegte Kennlinien und die gleichwertigen Fuzzy-Systemausgangsgrößen auch auf ein Kupplungssteuerungssystem 16, 40 übertragen, das als Regelgröße die Differenzdrehzahl zwischen der Motor- und der Getriebeeingangsdrehzahl besitzt. Dabei muß aber die Sollwertvorgabe bis zu dem Zeitpunkt t2 auf null absinken.

Das Raddrehmoment wird in der IPM-Steuerung 16 erfasst. Diese kann - zusätzlich zu einer Vorgabe des Motordrehmoments durch den Fahrer über das Fahrpedal 6 an die Motorsteuerung 2 - eine Korrektur des Raddrehmoments bewirken. Dies geschieht über die Schaltungsbestandteile 27, 28 und die Leitungen 18-21 und 37 der Antriebsstrangsteuerung 1. Durch die Entscheidungsschaltung 27 wird das Soll-Radmoment in ein (korrigiertes) Soll-Motormoment transformiert.

Über die Leitung 42 ermittelt die Kupplungssteuerung 40 das angeforderte Soll-Radmoment und damit das Soll-Kupplungsdrehmoment (der einlegte Gang ist der Kupplungssteuerung bekannt). Damit läßt sich die Lage der Kupplung vorsteuern und somit eine bessere Regelgüte erreichen. Über die Leitung 43 wird es der IPM-Steuerung 16 mitgeteilt, wenn Einschränkungen in der Kupplungsfunktion vorliegen, zum Beispiel bei Überhitzung. Dann kann ein daraus resultierender Ausfall von fahrleistungsorientierten Manövern oder von Kriechbetrieb, d. h. ein Wegfall von in der Kupplung eine Verlustleistung bewirkenden Betriebsarten, erforderlichenfalls durch eine Anhebung des Radmoments und damit des Motormoments (erst bei geschlossener Kupplung) ausgeglichen werden. Dies schont den Kupplungsbelag.

Hier wird ein weiterer Vorteil der Antriebsstrangsteuerung 1 deutlich: Das Motordrehmoment kann auch abhängig vom Kupplungszustand gesteuert werden, und zwar wenn nötig unter Nichtbeachtung des vorgegebenen Raddrehmoments, das erst bei vollständig geschlossener Kupplung vorliegt.

Werden die Schaltungsbestandteile 10, 16 26-28, 40 und die zugehörigen Signalleitungen zusammengefaßt, so bilden sie ein integriertes Kupplungs- und Motormanagement. Die aus der Figur 3 ersichtlichen Kennlinien sind wie erwähnt in dem Kennfeldspeicher 51 der IPM-Steuerung 16 abgelegt, die eine ganzheitliche Realisierung der Steuerung eines Antriebsstrangs darstellt und deshalb auch als sogenannter Meta-Controller bezeichnet wird.

Ein weiterer Vorteil einer derartigen Antriebsstrangsteuerung 1 mit integrierter Motorbeeinflussung ist, daß durch die Kupplungssteuerung verursachte Drehzahländerungen keine Veränderung, zum Beispiel Reduktion, des Motordrehmoments nach sich ziehen.

Dies kann bei Systemen vorkommen, die das Fahrpedal quasi aufspannen zwischen dem minimalen und dem maximalen Drehmoment bei Vollast, da diese Extrema drehzahlabhängig sind. Dies kann zu dem Effekt führen, daß dadurch das Radmoment sinkt - und durch den Fahrer ausgeglichen werden muß. Die IPM-Steuerung als Meta-Controller entkoppelt die Betriebsgrößen, so dass über die (Schnittstellen-)Leitung 37 das von dem Fahrer angeforderte (= requested) Motordrehmoment tq,eng,req korrigiert werden kann, und zwar durch Übermitteln eines Differenzdrehmoments delta_tq,eng,req über die Leitung 37.

Von der Getriebesteuerung 3 wir über die Leitung 37 nicht nur ein statischer Korrekturwert an die Motorsteuerung 2 übertragen, es kann erforderlichenfalls über einen separaten Übertragungskanal auch die Drehmomentdynamik des Motors beeinflusst werden. Dies ist dann von Vorteil, wenn die Dynamik der Kupplungsregelung im Hinblick auf das Drehmoment geringer ist als die des Motors. Außerdem ist von Vorteil, dass die Motorsteuerung 2 für verschiedene Motortypen bis auf die notwendigen Schnittstellen unverändert bleiben kann, insbesondere was die Interpretation der Fahrpedalstellung anbelangt.

Der Kennlinienspeicher oder das Fuzzy-Logik-System können bei einem anderen Ausführungsbeispiel auch in der Kupplungssteuerung 40 lokalisiert sein. In diesem Fall wird der Antriebsstrang über das angeforderte Motordrehmoment tq,eng,req (das in der Motorsteuerung 2 berechnet wird) geführt. Die erforderliche Information gelangt über die Schnittstellenleitungen 18-21 zu der Getriebe- und Kupplungssteuerung 3.

Eine weitere Variante der Antriebsstrangsteuerung besteht darin, der Motorsteuerung 2 über die Leitung 44 direkt eine Soll-Motordrehzahl vorzugeben. Diese wird dann durch einen Drehzahlregler der Motorsteuerung 2 geregelt. Diese Variante hat den Vorteil, dass die Kupplungssteuerung 40 keinen motorspezifischen Regler und Reglerparameter enthalten muss. Außerdem entfällt die Möglichkeit einer Kollision zwischen in der Kupplungssteuerung 40 und in der Motorsteuerung 2 enthaltenen Reglern. Die Motorsteuerung enthält statt dessen eine Entscheidungslogik, mit der die Drehzahlführung eindeutig festgelegt wird.

**Patentansprüche**

1. Antriebsstrangsteuerung (1) eines Kraftfahrzeugs mit einem Motor, einem Getriebe und einer automatisch betätigten Kupplung, die versehen ist mit

   - einer Motorsteuerung (2), durch die das Drehmoment des Motors beeinflussende Größen gesteuert werden, und
   - einer Getriebesteuerung (3), durch die die Schaltvorgänge des automatischen Getriebes gesteuert werden, die mit der Motorsteuerung (2) Daten austauscht, durch welche ein komfortabler Betrieb des Kraftfahrzeugs ermöglicht wird, und die mit einer Erkennungsschaltung (50) versehen ist, durch die die jeweilige Fahrsituation des Kraftfahrzeugs und die Fahrercharakteristik ermittelt werden, und

- einer Steuereinrichtung (40) für die Kupplung (51), die beim Anfahren des Kraftfahrzeugs an die ermittelte Fahrsituation und/oder die Fahrercharakteristik adaptiv angepasst gesteuert wird, und durch die beim Anfahren des Kraftfahrzeugs an die Motorsteuerung (2) Signale übermittelt werden, mit denen die Motordrehzahl (ne) nach gespeicherten oder mit einem Fuzzy-Logik-System erzeugten Kennlinien [ne = f(tq,eng;t)] gesteuert wird.

2. Antriebsstrangsteuerung nach Anspruch 1, **dadurch gekennzeichnet, dass** sie eine Schaltsteuerung (16) aufweist, durch die aus der Stellung eines Fahrpedals ein Soll-Radmoment berechnet wird und

  - dass durch die Schaltsteuerung (16) das Motordrehmoment (tq,eng) anhand des Soll-Radmoments gesteuert wird.

3. Antriebsstrangsteuerung nach Anspruch 1, **dadurch gekennzeichnet, dass** die Erkennungsschaltung (50) als ein Fuzzy-Logik-System ausgebildet ist.

4. Antriebsstrangsteuerung nach Anspruch 1, **dadurch gekennzeichnet, dass** sie mit einem Kennfeldspeicher (51) versehen ist, der Kennlinien enthält, mit denen die Kupplung (52) beim Anfahren und Rangieren des Kraftfahrzeugs gesteuert wird.

5. Antriebsstrangsteuerung nach Anspruch 4, **dadurch gekennzeichnet, dass** in dem Kennfeldspeicher (51) mehrere, unterschiedlichen Anfahrsituationen entsprechende Kennlinien (A, B, C) enthalten sind.

6. Antriebsstrangsteuerung nach Anspruch 1, **dadurch gekennzeichnet, dass** durch das Fuzzy-Logik-System (55) eine Motor-Solldrehzahl (ne,eng, nom) anhand eines Motor-Sollmoments (tq,eng, nom), eines den Fahrer charakterisierenden Parameters (Fahrerwert) und/oder eines die Fahrzeugbelastung charakterisierenden Parameters (Lastwert) erzeugt wird.

7. Antriebsstrangsteuerung nach Anspruch 1, **dadurch gekennzeichnet, dass** in der Schaltsteuerung (16) Kennlinien in Form des Verlaufs der Motordrehzahl (ne) in Abhängigkeit von dem Soll-Motordrehmoment (tq,eng,nom) und der Zeit (t) abgelegt sind.

8. Antriebsstrangsteuerung nach Anspruch 1, **dadurch gekennzeichnet, dass** das Soll-Motordrehmoment (tq,eng,nom) durch eine in der Kupplungssteuerung enthaltene Drehzahlregelung anhand einer Kennlinie (AP,eco; AP,power1) eingestellt wird.

9. Antriebsstrangsteuerung nach Anspruch 1, **dadurch gekennzeichnet, dass** sie einen Kriechmodus aufweist, der mit einer Kennlinie (AP,creep) gesteuert wird.

## Claims

1. Controller (1) for the drive train of a motor vehicle having an engine, a transmission and an automatically activated clutch, which is provided with

   - an engine controller (2) by means of which variables which influence the torque of the engine are controlled, and
   - a transmission controller (3) by means of which the gear-shifting operations of the automatic transmission are controlled and which exchanges data with the engine controller (2), which data permits comfortable operation of the motor vehicle, and which is provided with a detection circuit (50) by means of which the respective driving situation of the motor vehicle and the driver's characteristics are determined, and
   - a control device (40) for the clutch (51) which is controlled adaptively with respect to the driving situation which is determined and/or the driver's characteristics when the motor vehicle starts, and by means of which, when the motor vehicle starts, signals with which the engine speed (ne) is controlled according to characteristic curves (ne=f(tq,eng;t)) which are stored or generated using a fuzzy logic system are transferred to the engine controller (2).

2. Controller for a drive train according to Claim 1, **characterized in that** it has a switching controller (16) by means of which a setpoint wheel torque is calculated from the position of an accelerator pedal, and

   - **in that** the engine torque (tq,eng) is controlled by the switching controller (16) with reference to the setpoint wheel torque.

3. Controller for a drive train according to Claim 1, **characterized in that** the detection circuit (50) is embodied as a fuzzy logic system.

**4.** Controller for a drive train according to Claim 1, **characterized in that** it is provided with a characteristic diagram store (51) which contains characteristic curves with which the clutch (52) are controlled when the motor vehicle starts and manoeuvres.

**5.** Controller for a drive train according to Claim 4, **characterized in that** a plurality of characteristic curves (A, B, C) corresponding to different starting situations are contained in the characteristic diagram store (51).

**6.** Controller for a drive train according to Claim 1, **characterized in that** an engine setpoint rotational speed (ne,eng,nom) is generated by means of the fuzzy logic system (55) with reference to an engine setpoint torque (tq,eng,nom), a parameter (driver's value) which characterizes the driver and/or a parameter (load value) which characterizes the loading of the vehicle.

**7.** Controller for a drive train according to Claim 1, **characterized in that** characteristic curves in the form of the profile of the engine speed (ne) are stored in the switching controller (16) as a function of the setpoint engine torque (tq,eng,nom) and of the time (t).

**8.** Controller for a drive train according to Claim 1, **characterized in that** the setpoint engine torque (tq,eng,nom) is set by a rotational speed regulator contained in the clutch controller with reference to a characteristic curve (AP,eco; AP,powerl).

**9.** Controller for a drive train according to Claim 1, **characterized in that** it has a creeping mode which is controlled with a characteristic curve (AP,creep).

**Revendications**

**1.** Commande de ligne motrice (1) d'un véhicule automobile comportant un moteur, une boîte de vitesses et un embrayage à actionnement automatique, qui est pourvue

- d'une commande de moteur (2) au moyen de laquelle des grandeurs influant sur le couple du moteur sont commandées, et
- d'une commande de boîte de vitesses (3) au moyen de laquelle les opérations de passage de vitesse de la boîte automatique sont commandées, qui échange des données avec la commande de moteur (2), au moyen de laquelle un fonctionnement confortable du véhicule automobile est permis et qui est pourvue d'un circuit de reconnaissance (50) au moyen duquel sont relevées la situation de conduite du véhicule automobile qui se présente chaque fois et la caractéristique de conducteur, et

- un dispositif de commande (40), pour l'embrayage (51), qui est adapté d'une manière adaptative, lors du démarrage du véhicule automobile, à la situation de conduite relevée et/ou la caractéristique de conducteur et au moyen de laquelle, lors du démarrage du véhicule automobile, il est communiqué à la commande de moteur (2) des signaux à l'aide desquels la vitesse de rotation de moteur (ne) est commandée conformément à des courbes caractéristiques [ne = f(tq,eng ; t] stockées en mémoire ou produites par un système en logique floue.

**2.** Commande de ligne motrice suivant la revendication 1, **caractérisée en ce qu'**elle comprend une commande de passage de vitesse (16) au moyen de laquelle un couple de roue de consigne est calculé à partir de la position d'une pédale d'accélérateur et

- **en ce qu'**au moyen de la commands de passage de vitesse (16), le couple moteur (tq,eng) est commandé à l'aide du couple de roue de consigne.

**3.** Commande de ligne motrice suivant la revendication 1, **caractérisée en ce que** le circuit de reconnaissance (50) est réalisé sous forme d'un système en logique floue.

**4.** Commande de ligne motrice suivant la revendication 1, **caractérisée en ce qu'**elle est pourvue d'une mémoire de tables caractéristiques (51) qui contient des courbes caractéristiques à l'aide desquelles l'embrayage (52) est commandé lors du démarrage et d'une manoeuvre du véhicule automobile.

**5.** Commande de ligne motrice suivant la revendication 4, **caractérisée en ce que** plusieurs courbes caractéristiques (A, B, C) correspondant à différentes situations de démarrage sont contenues dans la mémoire de tables caractéristiques (51).

**6.** Commande de ligne motrice suivant la revendication 1, **caractérisée en ce qu'**au moyen du système en logique floue (55), une vitesse de rotation de consigne de moteur (ne,eng,nom) est produite à l'aide d'un couple de consigne de moteur (tq,eng, nom), d'un paramètre caractérisant le conducteur (valeur de conducteur) et/ou d'un paramètre caractérisant la charge du véhicule (valeur de charge).

**7.** Commande de ligne motrice suivant la revendication 1, **caractérisée en ce que** des courbes caractéristiques se présentant sous la forme de la variation de la vitesse de rotation de moteur (ne) en fonction du couple moteur de consigne (tq,eng,nom) et du temps (t) sont déposées dans la commande de passage de vitesse (16).

8. Commande de ligne motrice suivant la revendication 1, **caractérisée en ce que** le couple moteur de consigne (tq,eng,nom) est établi, au moyen d'une régulation de vitesse de rotation contenue dans la commande d'embrayage, à l'aide d'une courbe caractéristique (AP,eco ; AP,power1).

9. Commande de ligne motrice suivant la revendication 1, **caractérisée en ce qu'**elle comporte un mode de glissement au ralenti qui est commandé à l'aide d'une courbe caractéristique (AP,creep).

FIG 1

EGS 3

Schaltübergangssteuerung 26

Kupplungssteuerung

IPM 50 51

EMS 2

µP

# FIG 2

ne
tq

C

ne

B

A

n, ein

D

n, aus

tq, eng

tq, wheel

t0    t1                    t2

# FIG 4

55

tq, eng, nom

driver          Fuzzy-Logic-System          n, eng, nom

load

FIG 3

tq, eng, nom
(tq, eng, reg)

M

AP, eco

X1

VL-Linie

AP, creep

AP, power 1

A

B

DK=konst.

AP, power 2

n, eng, nom, eco          n, eng, nom, power 1    Sport          n, eng, nom

EP 1 078 805 B1